# EUROPÄISCHE PATENTSCHRIFT

(11) **EP 1 318 926 B1**
(45) Veröffentlichungstag und Bekanntmachung des Hinweises auf die Patenterteilung: **04.05.2005**
(21) Anmeldenummer: 01982149.5
(22) Anmeldetag: 21.09.2001
(51) Int. Cl.: B60N 2/20

(54) **VORRICHTUNG ZUR VERSTELLUNG DER LEHNENNEIGUNG**
DEVICE FOR ADJUSTMENT OF BACKREST INCLINATION
DISPOSITIF DE REGLAGE DE L'INCLINAISON D'UN DOSSIER

(30) Priorität: 21.09.2000 DE 10048228
(43) Veröffentlichungstag der Anmeldung: 18.06.2003
(73) Patentinhaber: Brose Fahrzeugteile GmbH & Co. KG, Coburg, 96450 Coburg (DE)
(72) Erfinder: KRÖNER, Gregor, 96120 Bischberg (DE); HOFMANN, Jochen, 96328 Küps (DE)
(74) Vertreter: Gross, Felix, Dr.
(86) Internationale Anmeldenummer: PCT/DE2001/003700
(87) Internationale Veröffentlichungsnummer: WO 2002/024480

(56) Entgegenhaltungen:
- EP-A- 1 026 028
- DE-A- 2 459 070
- DE-A- 3 008 764
- FR-A- 2 649 942
- US-A- 4 147 386

## Beschreibung

Die Erfindung betrifft eine Vorrichtung zur Verstellung der Lehnenneigung nach dem Oberbegriff der Ansprüche 1 und 2, die jener nach der DE-A-3 008 764 gattungsgemäß aus gebildet ist.

Aus der DE-A-30 08 764 ist eine Sitzanordnung für ein Kraftfahrzeug bekannt, bei der ein und dasselbe Betätigungsorgan dazu verwendet wird, die Neigung und die Horizontalverstellung eines Sitzes zu steuern. Die Ansteuerung der unterschiedlichen Funktionen erfolgt dadurch, dass das Betätigungsorgan jeweils in einem bestimmten Winkel verrastet wird. Dies ist nachteilig, da eine Fehlbedienung, d.h. die Wahl eines falschen Winkels, zu einem unbeabsichtigten Verrutschen des Sitzes führen kann.

Der vorliegenden Erfindung liegt die Aufgabe zugrunde, Vorrichtungen zu schaffen, bei der definierte Lehnenneigungen in einfacher Weise zusammen mit einer hohen Bediensicherheit einstellbar sind.

Diese Aufgabe wird erfindungsgemäß durch Vorrichtungen mit den Merkmalen des Anspruchs 1 und des Anspruchs 2 gelöst.

Die erfindungsgemäße Vorrichtung weist ein drehbares Rastmittel auf, das mit der Rückenlehne verbunden ist. Zur Einstellung der Lehnenneigung ist das Rastmittel mit einem in seiner Lage verstellbaren Rastelement in definierten Rastpositionen verrastbar. Dabei ist das Rastelement mindestens über einen Betätigungsmechanismus in eine definierte räumliche Lage bringbar, so daß es in einer Lage nur mit einer Teilmenge der möglichen Rastpositionen verrastbar ist.

Durch die Abstimmung der definierten Rastpositionen und der definierten Lagen des Rastmittels können unterschiedliche Neigungen der Lehne in einfacher Weise angesteuert werden.

Die Aufgabe wird auch durch eine Vorrichtung zum Verstellen der Lehnenneigung einer Rückenlehne eines Sitzes, insbesondere in einem Kraftfahrzeug, gelöst, bei der die Rückenlehne mit einem drehbaren Rastmittel verbunden ist, das zur Einstellung der Lehnenneigung mit einem in seiner Lage verstellbaren Rastelement in definierten Rastpositionen verrastbar ist, wobei das Rastelement über mindestens einen Betätigungsmechanismus in eine definierte räumliche Lage bringbar ist, so daß es in einer Lage nur mit einer Teilmenge der möglichen Rastpositionen verrastbar ist, dadurch gekennzeichnet, daß das Rastmittel ein Auslösemittel, insbesondere einen Nocken oder eine Bowdenzugverbindung aufweist, mit dem bei einer vorbestimmten Neigung der Rückenlehne automatisch eine Arretierung der Horizontalverstellung des Sitzes gelöst und / oder verriegelt wird.

Vorteilhafte Ausgestaltungen der Erfindung sind in den auf die Ansprüche 1 und 2 rückbezogenen Ansprüchen angegeben.

Die Erfindung wird nachfolgend unter Bezugnahme auf die Figuren der Zeichnungen an mehreren Ausführungsbeispielen näher erläutert. Es zeigen:
- Fig. 1: eine Seitenansicht (Fahrtrichtung nach rechts) einer Vorrichtung zur Verstellung der Lehnenneigung;
- Fig. 2: eine Seitenansicht (Fahrtrichtung nach links) der Vorrichtung zur Verstellung der Lehnenneigung;
- Fig. 3: eine Seitenansicht nach Fig. 2 mit im Durchbruch dargestellten Elementen;
- Fig. 4: eine Seitenansicht analog Fig. 1 mit der Vorrichtung in einer ersten Betriebsstellung vor einer Verrastung der Lehne;
- Fig. 5: eine Seitenansicht nach Fig. 4 mit der Vorrichtung in der ersten Betriebsstellung nach der Verrastung der Lehne;
- Fig. 6: eine Seitenansicht analog Fig. 1 mit der Vorrichtung in einer zweiten Betriebsstellung vor einer Verrastung der Lehne;
- Fig. 7: eine Seitenansicht nach Fig. 6 mit der Vorrichtung in der zweiten Betriebsstellung nach der Verrastung der Lehne;
- Fig. 8: eine Seitenansicht analog Fig. 1 mit der Vorrichtung in einer dritten Betriebsstellung vor einer Verrastung der Lehne;
- Fig. 9: eine Seitenansicht nach Fig. 8 mit der Vorrichtung in der dritten Betriebsstellung nach der Verrastung der Lehne;
- Fig. 10: eine Seitenansicht analog Fig. 1 mit der Vorrichtung in einer vierten Betriebsstellung vor einer Verrastung der Lehne;
- Fig. 11: eine Seitenansicht nach Fig. 10 mit der Vorrichtung in der vierten Betriebsstellung nach der Verrastung der Lehne;
- Fig. 12: eine perspektivische Darstellung einer Ausführungsform der erfindungsgemäßen Vorrichtung in der unverrasteten ersten Betriebsstellung (analog Fig. 4);
- Fig. 13: eine perspektivische Darstellung der Ausführungsform nach Fig. 12 in der unverrasteten zweiten Betriebsstellung (analog Fig. 6);
- Fig. 14: eine perspektivische Darstellung der Ausführungsform nach Fig. 12 in der verrasteten zweiten Betriebsstellung (analog Fig. 7);
- Fig. 15: eine perspektivische Darstellung der Ausführungsform nach Fig. 12 in der unverrasteten dritten Betriebsstellung (analog Fig. 8);
- Fig. 16: eine perspektivische Darstellung der Ausführungsform nach Fig. 12 in der unverrasteten vierten Betriebsstellung (analog Fig. 10);
- Fig. 17-20: perspektivische Ansichten der erfindungsgemäßen Vorrichtung in einer Sitzkonstruktion angeordnet.

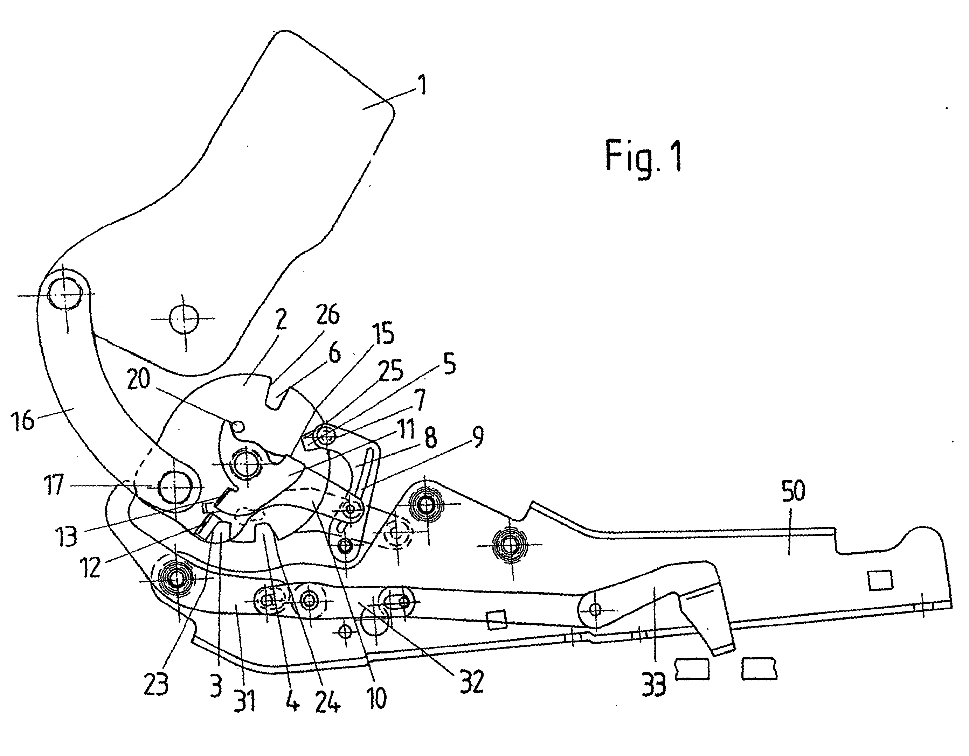

In Fig. 1 ist in einer Seitenansicht eine Vorrichtung zur Verstellung der Neigung einer Rückenlehne 1 in einem Kraftfahrzeug dargestellt. Die schematisch dargestellte Rückenlehne 1 ist dabei Teil eines hier nicht dargestellten Sitzes. Teil des Sitzes ist dabei ein Seitenteil 50, das in horizontaler Richtung vor- und zurück (in der Fig. 1 rechts - links) schiebbar ist. In Fig. 1 wird angenommen, daß eine auf dem Sitz sitzende Person in Fahrtrichtung nach rechts schaut.

Die erfindungsgemäße Vorrichtung soll hier am Beispiel einer Rückenlehne 1 in einem Van dargestellt werden, wobei es die Aufgabe ist, die Rückenlehne 1 in vier definierbaren Positionen einzustellen. Grundsätzlich bezieht sich die Erfindung aber auf eine Einstellung von allgemein mehr als zwei Positionen der Rückenlehne 1.

Dazu dient erfindungsgemäß ein Rastmittel, das hier als eine Nockenscheibe 2 mit vier Ausnehmungen 3, 4, 5, 6 ausgebildet ist.

Die Rückenlehne 1 ist über ein Verbindungsstück 16 mit der Nockenscheibe 2 exzentrisch so verbunden, daß eine Verschwenkung der Rückenlehne in eine Drehung der Nockenscheibe 2 umgesetzt wird.

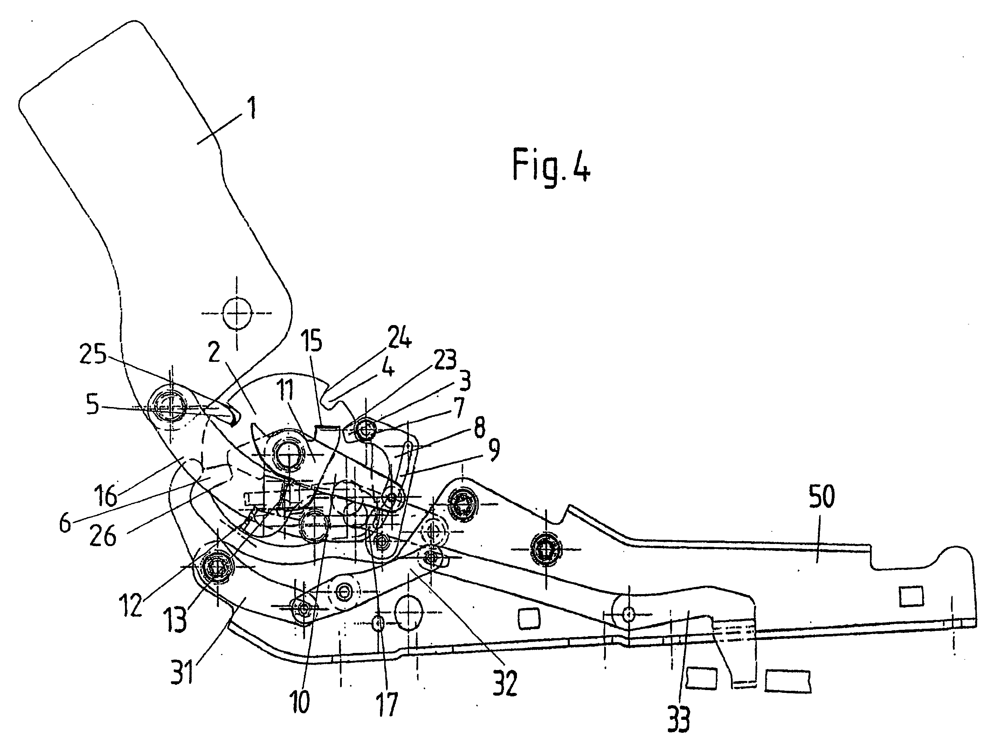

Die Nockenscheibe 2 weist hier vier Ausnehmungen 3, 4, 5, 6 auf, die mit einem Verriegelungsbolzen 7 auf einem mit Federkraft vorgespannten Verriegelungshebel 8 in Eingriff gebracht werden können (siehe Fig. 4 bis 11). Die Ausnehmungen 3, 4, 5, 6 entsprechen dabei verschiedenen Neigungen der Rückenlehne 1.

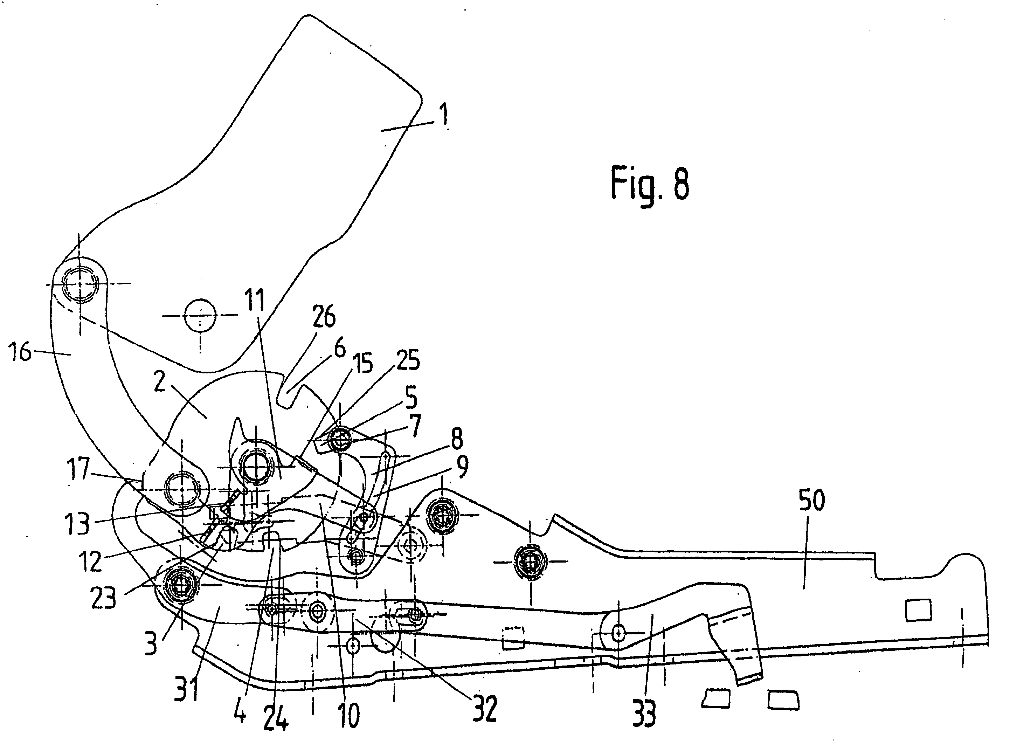

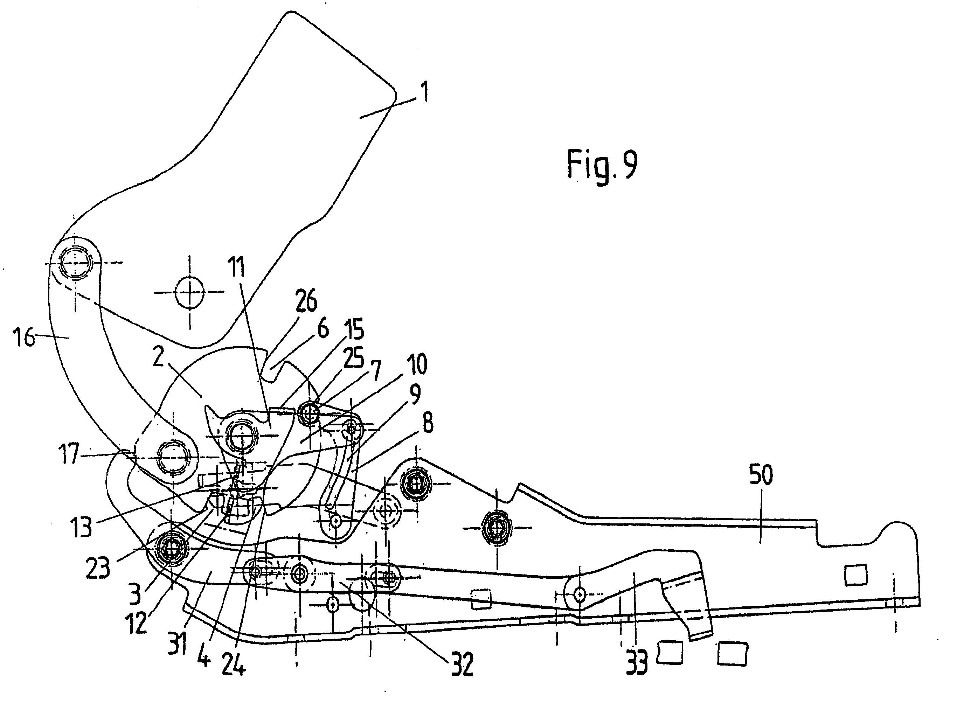

Fig. 1 zeigt eine dritte Betriebsstellung (siehe auch Fig. 8, 9), anhand derer das Zusammenspiel der einzelnen Bauteile erläutert werden soll.

Die dritte Betriebsstellung betrifft eine "easy entry" Funktion eines Sitzes, bei der das Einsteigen in ein Kraftfahrzeug erleichtert werden soll. Dabei wird die Rückenlehne 1 relativ weit nach vorne geklappt und eine Verschiebung des Sitzes nach vorne ermöglicht.

Die Verschiebung des Sitzes nach vorne wird dadurch ermöglicht, daß ein Nocken 17 der Nockenscheibe 2 eine Gelenkhebelkette 31, 32, 33 betätigt. Die Gelenkhebelkette 31, 32, 33 besteht aus drei Gelenkhebeln, die jeweils um einen Drehpunkt verschwenkbar sind.

In der dargestellten Betriebsstellung drückt der Nocken 17 einen gegen diesen vorgespannten ersten Gelenkhebel 31 entgegen den Uhrzeigersinn. Dadurch wird ein zweiter Gelenkhebel 32, der mit einem Ende des ersten Gelenkhebels 31 drehbar verbunden ist, im Uhrzeigersinn verschwenkt.

An dem Ende des zweiten Gelenkhebels 32, das der Verbindung zwischen dem ersten und dem zweiten Gelenkhebel gegenüberliegt, ist der zweite Gelenkhebel 32 drehbar mit einem dritten Gelenkhebel 33 verbunden. Die Drehung des zweiten Gelenkhebels 32 im Uhrzeigersinn führt dazu, daß der dritte Gelenkhebel 33 entgegen den Uhrzeigersinn verschwenkt wird.

Am freien Ende des dritten Gelenkhebels 33 ist ein Haken angeordnet, der mit einem festen Teil des Kraftfahrzeugs arretierbar ist. Dies ist in Fig. 1 schematisch als Öffnung dargestellt. Durch die oben beschriebene Verschwenkung des dritten Gelenkhebels 33 wird der Haken aus der Öffnung gezogen, so daß eine Arretierung aufgehoben wird und der Sitz verstellbar ist.

Die Kraftübertragung von der Nockenscheibe 2 auf ein Arretierungsmittel (z.B. einen Haken) kann alternativ auch über einen Bowdenzug erfolgen.

Für die Steuerung des Verriegelungsbolzens 7 in Bezug auf die vier Ausnehmungen 3, 4, 5, 6 werden eine Reihe von Bauteilen verwendet.

Ein erstes Drehelement 11 ist auf drehbar der gleichen Welle gelagert wie die Nockenscheibe 2. Das erste Drehelement 11 weist einen hakenförmig ausgebildeten Mitnehmer 15 auf, der eine Kraft auf ein zwischen der Nockenscheibe 2 und dem ersten Drehelement 11 liegendes zweites Drehelement 10 übertragen kann. Das zweite Drehelement 10 ist in der Fig. 1 nur zum Teil sichtbar und weist im wesentlichen die Form eines großen "L" auf. Auch das zweite Drehelement 10 ist auf der gleichen Welle angeordnet wie die Nockenscheibe 2.

Die Drehelemente 10, 11 und der hier nicht dargestellte Hebel sind Betätigungsmechanismen für den Verriegelungsbolzen 7, wobei der Hebel unabhängig von den Drehelementen bedienbar ist.

Das erste Drehelement 11 weist eine erste Bowdenbefestigungsstelle 13 auf, an der ein hier nicht dargestellter ersten Bowdenzug befestigt ist. Wird an diesem ersten Bowdenzug gezogen, so bewegt sich das erste Drehelement 11 im Uhrzeigersinn. Allerdings ist das erste Drehelement 11 so aus ausgebildet, daß die Drehbewegung nur bis zu einem bestimmten Winkel ausführbar ist. Nach einer Bewegung im Uhrzeigersinn stößt ein Teil des ersten Drehelements 11 nämlich an einen Anschlag 20, der an einem hier nicht dargestellten Bauteil angeordnet ist (der Anschlag 20 ist aus Gründen der Übersichtlichkeit in den folgenden Figuren nicht mehr dargestellt). Dieser Anschlag 20 definiert eine Endstellung der Drehbarkeit des ersten Drehelements 11.

Das zweite Drehelement 10 weist an der kurzen Seite des großen "L" eine zweite Bowdenbefestigungsstelle 12 auf, an der ein hier nicht dargestellter zweiter Bowdenzug befestigt ist. Wird an diesem Bowdenzug gezogen, so wird das zweite Drehelement 10 im Uhrzeigersinn bewegt.

Die lange Seite des L-förmigen zweiten Drehelements 10 weist einen Nocken auf, der mit einer Kulissenführung 9 des Verriegelungshebels 8 im Eingriff steht. Der Verriegelungshebel 8 ist im wesentlichen L-förmig ausgebildet, wobei an der kurzen Seite der Verriegelungsbolzen 7 angeordnet ist. Am Ende der langen Seite des Verriegelungshebels 8 ist dieser verschwenkbar angeordnet.

Wird das zweite Drehelement 10 im Uhrzeigersinn verschwenkt, so führt der Nocken, der mit der Kulissenführung 9 im Eingriff steht eine Drehbewegung aus, die mittels der Kulissenführung 9 in eine Drehbewegung des Verriegelungshebels 8 im Uhrzeigersinn umgesetzt wird. Diese Drehbewegung wiederum führt dazu, daß der Verriegelungsbolzen 7 aus einer der Ausnehmungen ein- bzw. ausrückbar ist. Eine Verschwenkung im Uhrzeigersinn führt dabei zu einem Ausrücken; eine Verschwenkung entgegen dem Uhrzeigersinn führt dabei zu einem Einrücken.

Die erste Ausnehmung 3 und die zweite Ausnehmung 4 werden mit dem Verriegelungsbolzen 7 über einen hier nicht dargestellten Hebel aus den Ausnehmungen 3, 4 ausgerückt oder in Eingriff gebracht.

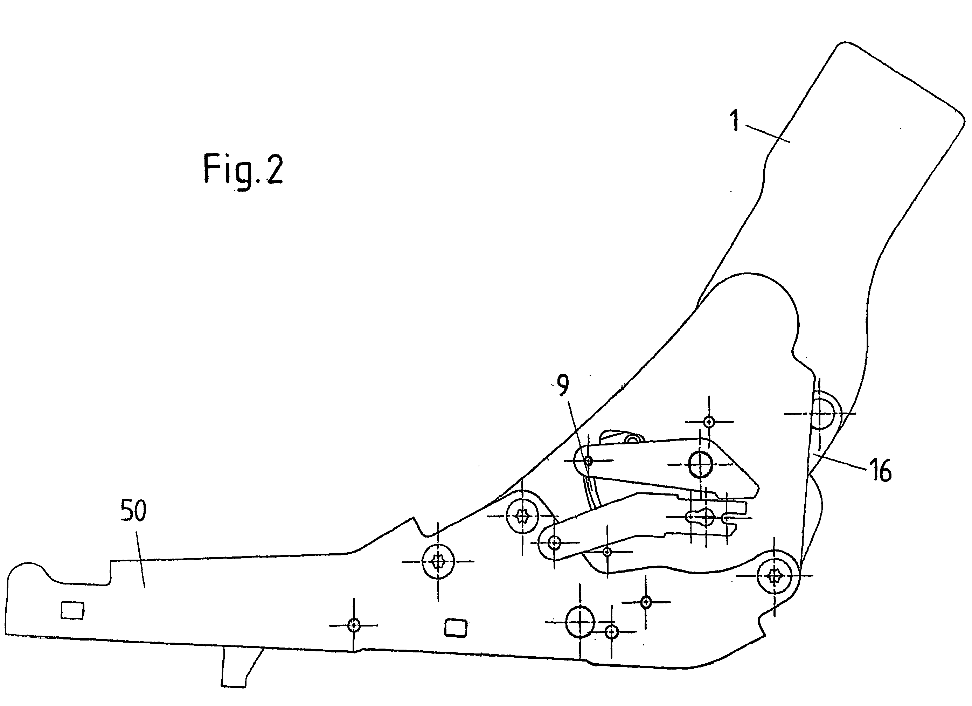

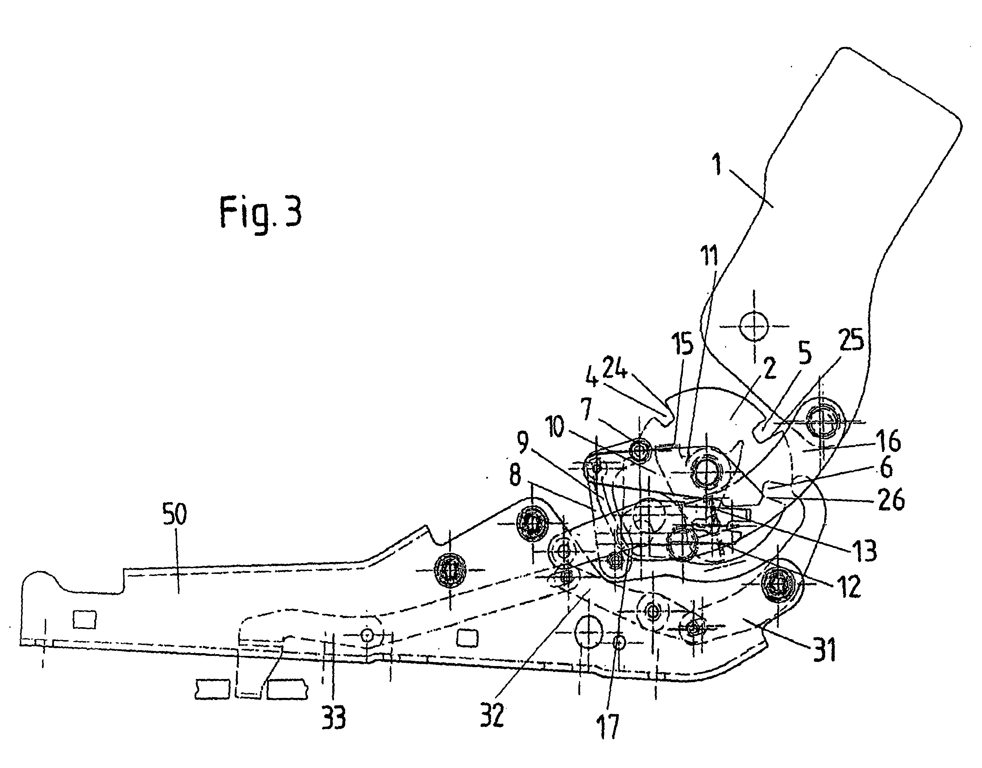

Fig. 2 und 3 zeigen die Vorrichtung Verstellung der Lehnenneigung von der anderen Seite des Sitzes (Fahrtrichtung in Fig. 2 und 3 nach links). Der Verriegelungsbolzen 7 ist dabei in der ersten Ausnehmung 3 eingerastet dargestellt.

Erfindungsgemäß ist der Verriegelungsbolzen 7 in definierter Weise so bewegbar, daß er in vorbestimmbarer Weise nur mit zugeordneten Ausnehmungen 3, 4, 5, 6 in Eingriff kommen kann. Hier nicht dargestellte Betätigungselemente (Handgriffe, Hebel etc.) sorgen dabei dafür, daß der Verriegelungsbolzen 7 jeweils um einen bestimmten Weg und / oder Winkel bewegt wird, so daß bei einer manuellen Verschwenkung der Rückenlehne 1, eine bestimmte Lehnenneigung, d.h. Betriebsstellung, angesteuert und verrastet werden kann.

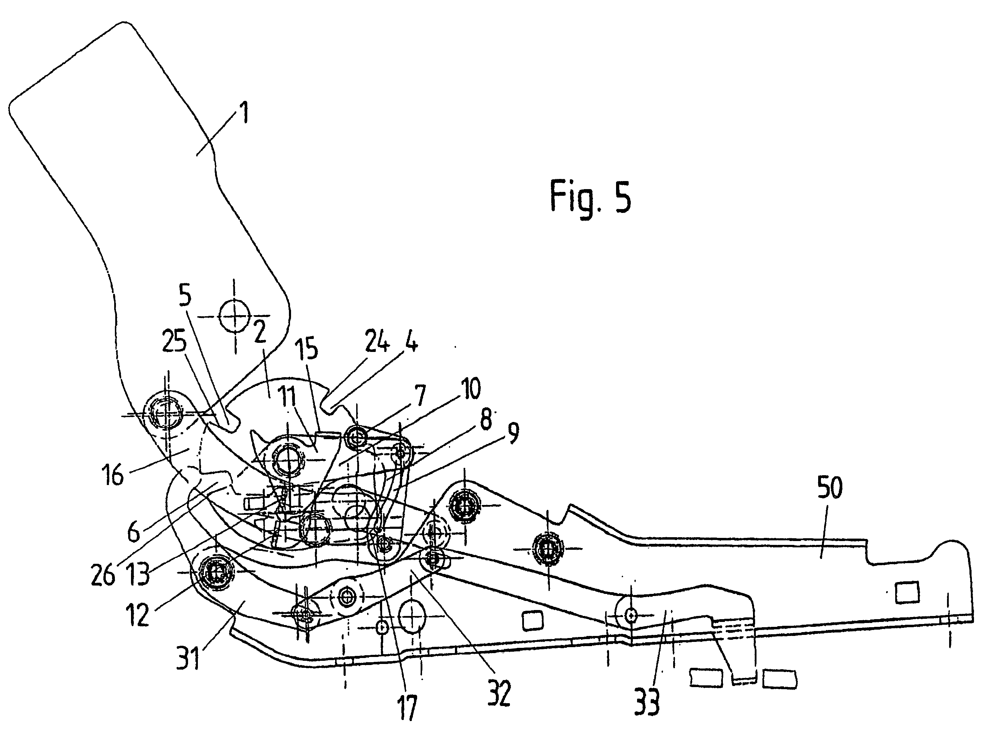

Der ersten Betriebsstellung (siehe Fig. 4, 5) ist die erste Ausnehmung 3 zugeordnet. In der ersten Betriebsstellung ist die Rückenlehne 1 relativ weit nach hinten geneigt.

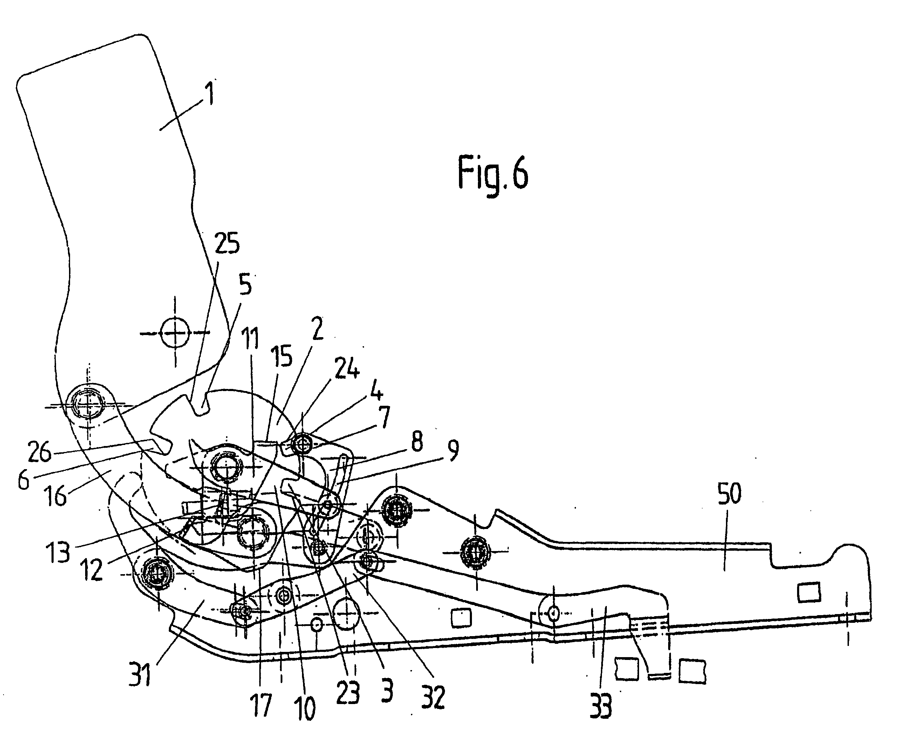

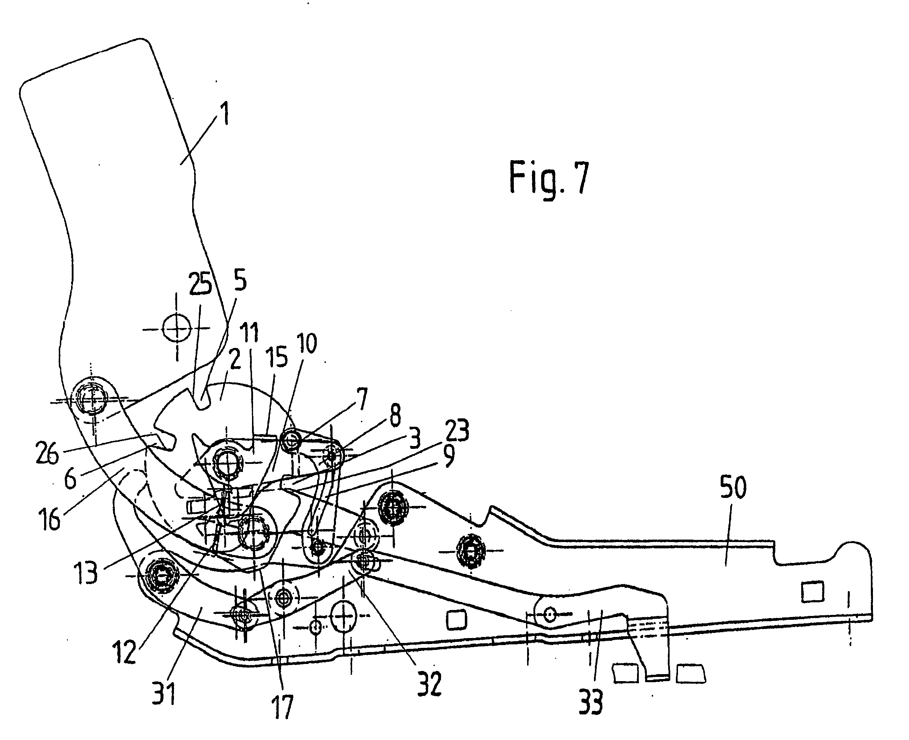

Der zweiten Betriebsstellung (siehe Fig. 6, 7) ist die zweite Ausnehmung 4 zugeordnet. In dieser Betriebsstellung ist die Rückenlehne etwa steiler angeordnet.

Die dritte Betriebsstellung (siehe Fig. 8, 9) betrifft, wie oben erläutert, die "easy entry" Funktion.

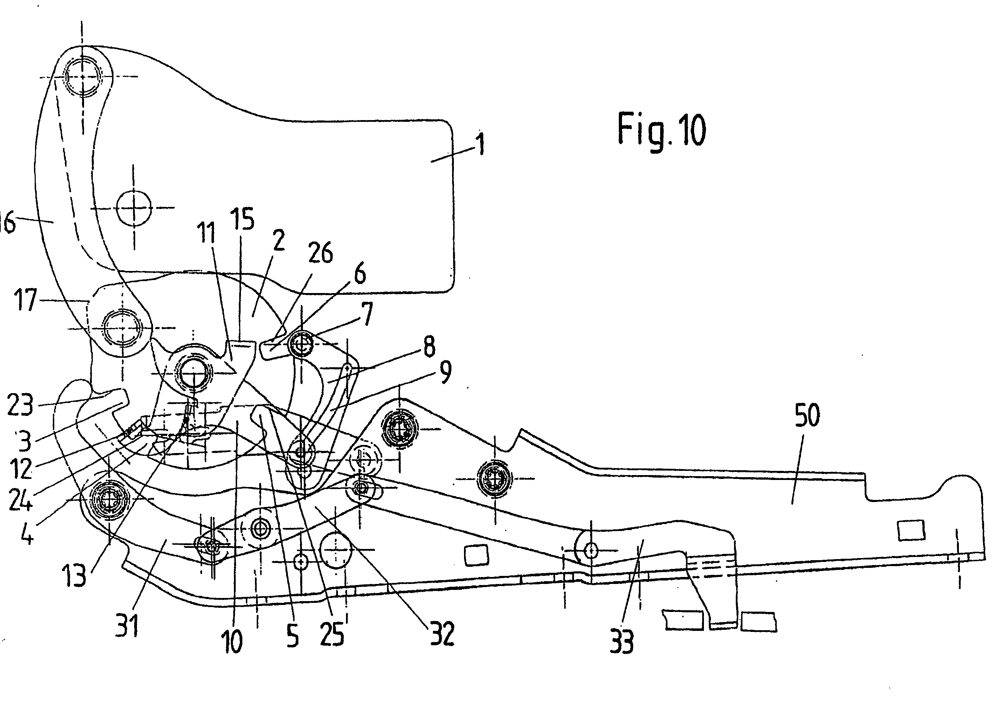

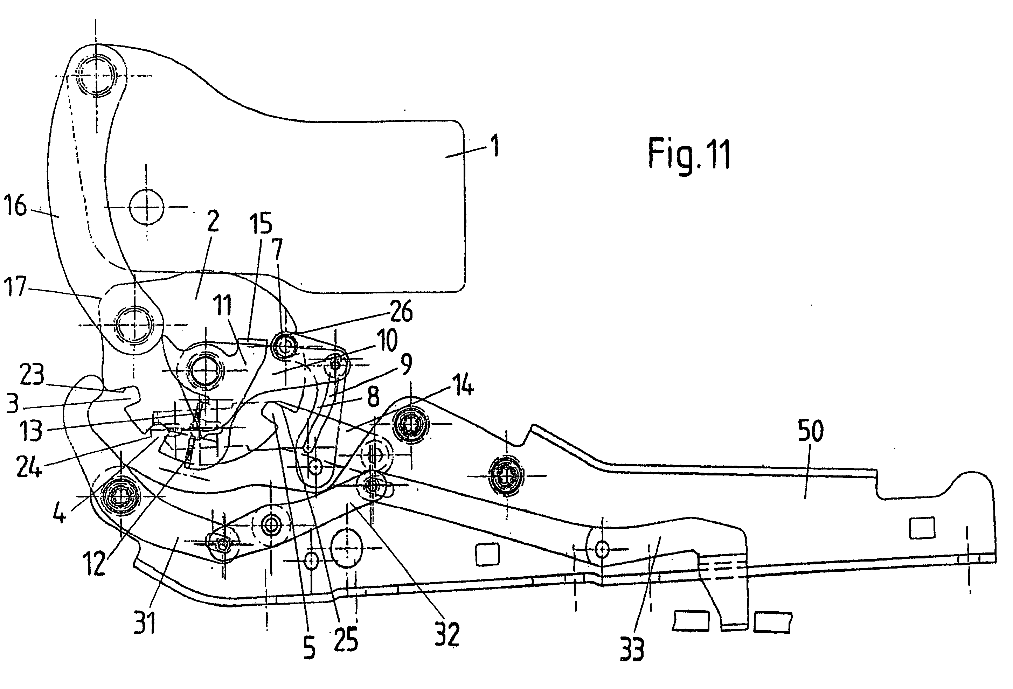

Die vierte Betriebsstellung (siehe Fig. 10, 11) betrifft die horizontale Anordnung der Rückenlehne 1, so daß die Rückseite der Rückenlehne 1 als Tisch benutzbar ist.

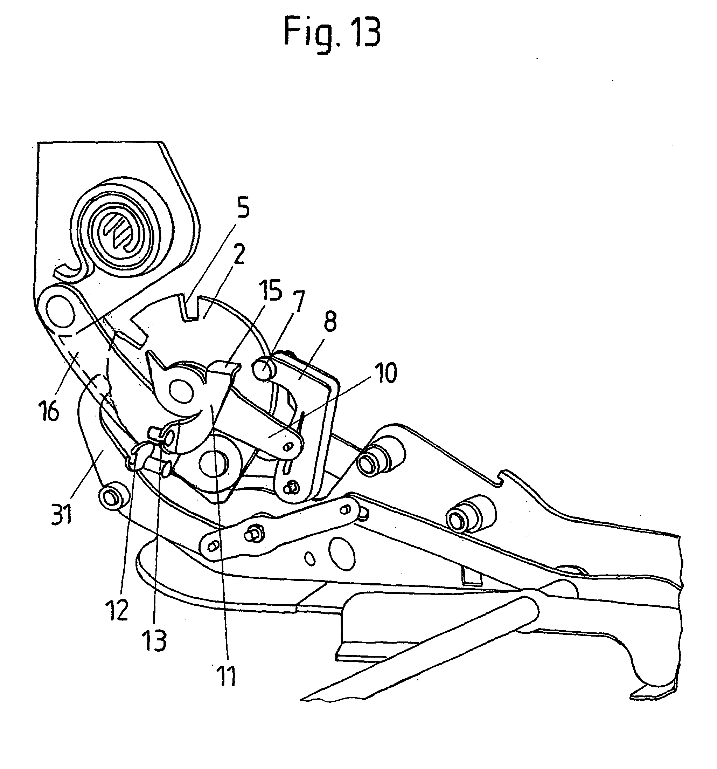

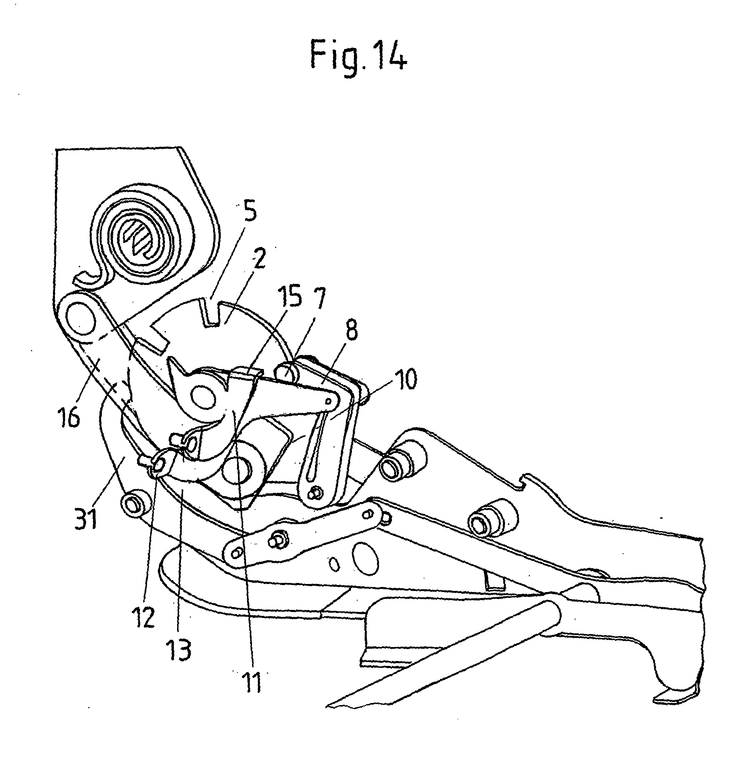

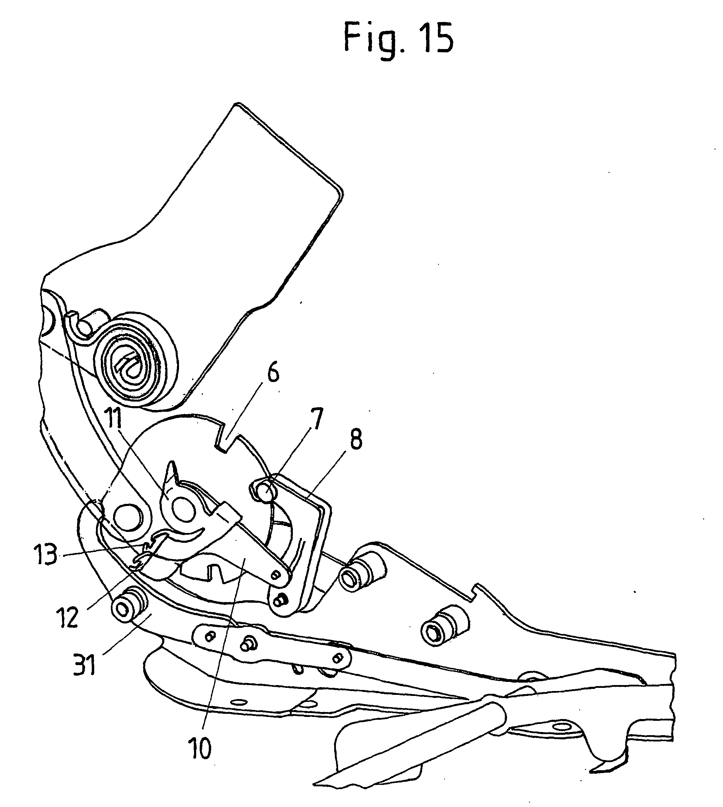

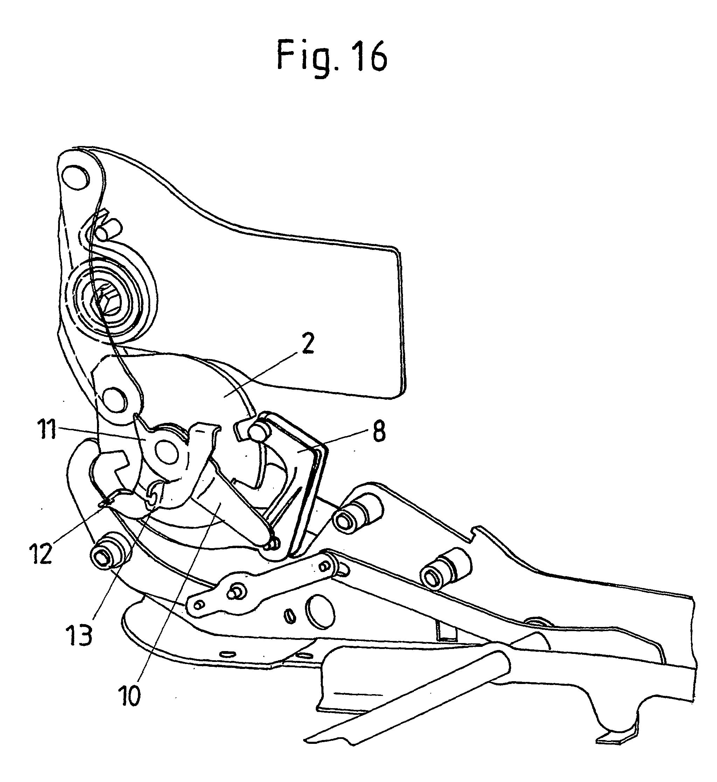

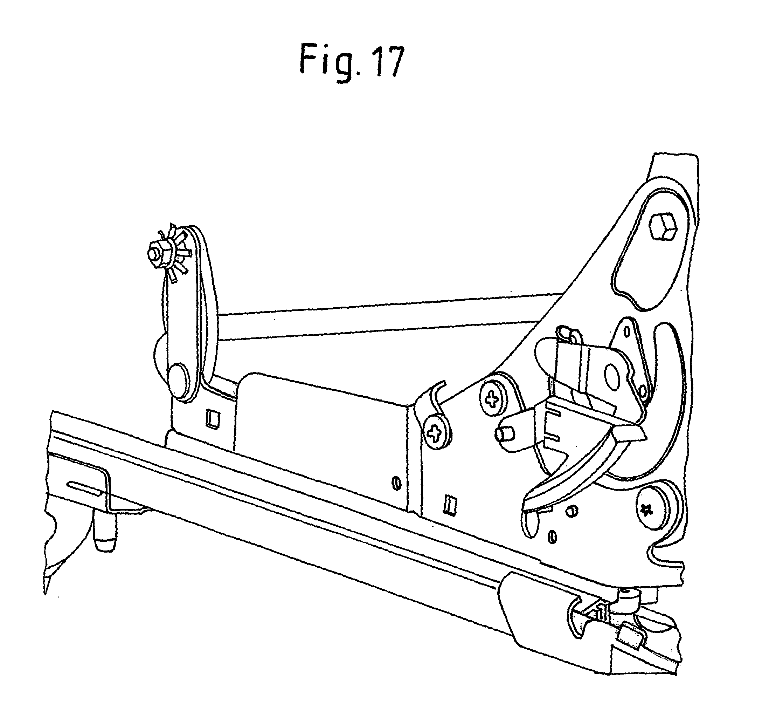

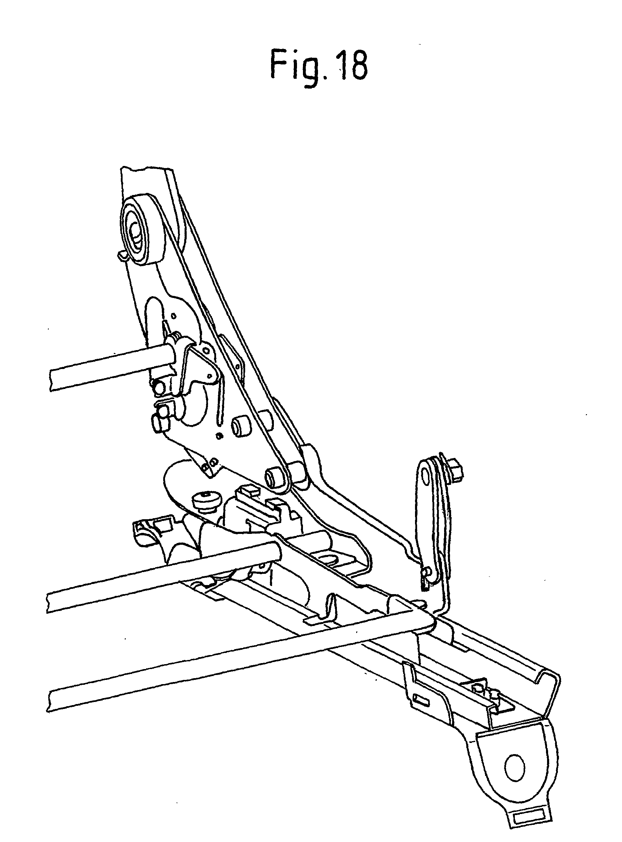

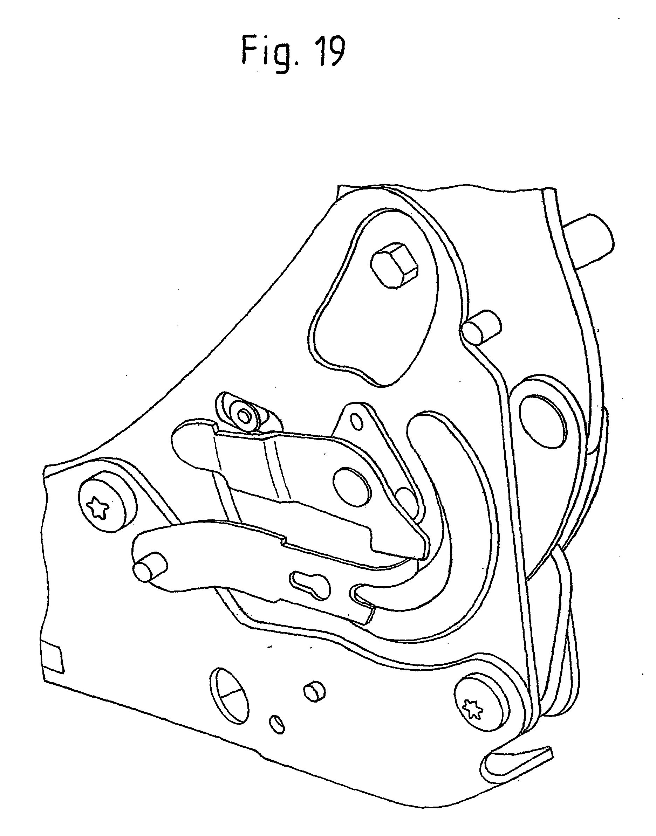

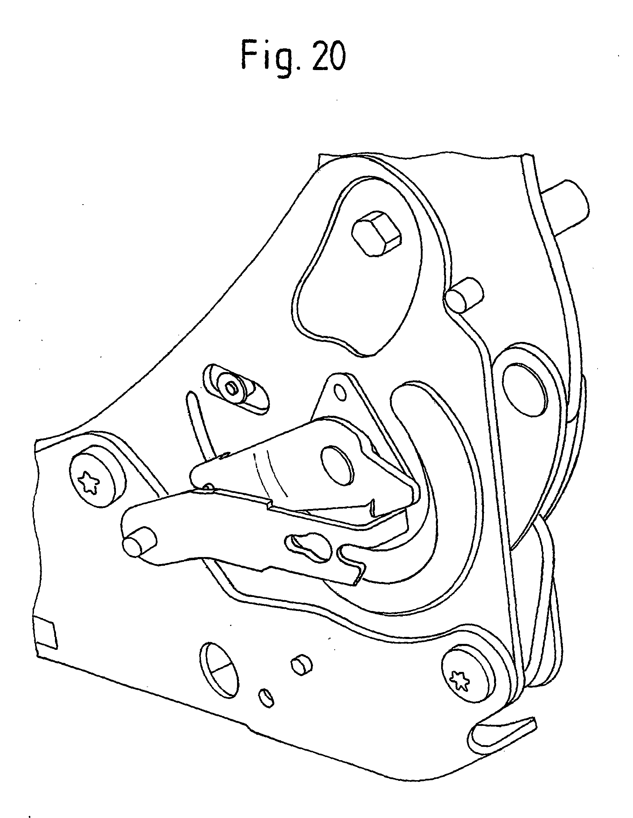

In den Fig. 4 bis 20 werden für die gleichen Bauteile die gleichen Bezugszeichen wie in Fig. 1 verwendet, so daß auf diese Beschreibung Bezug genommen werden kann.

Die Nockenscheibe 2 weist eine komplexe, stufenförmige Außenkontur auf, die auf die definierten Lageänderungen des Verriegelungsbolzens 7 abgestimmt ist. Die Stufen der Außenkontur werden dabei jeweils durch Seitenflächen 24, 25, 26 der Ausnehmungen 4, 5, 6 gebildet, die in radialer Richtung länger sind, als die gegenüberliegende Seitenfläche der Ausnehmung 4, 5, 6.

Die zweite Seitenfläche 24 der zweiten Ausnehmung 4 ist in radialer Richtung etwas länger als die erste Seitenfläche 23 der ersten Ausnehmung und die gegenüberliegende Seitenfläche der zweiten Ausnehmung 4. Die zweite Seitenfläche bildet einen Anschlag für den Verriegelungsbolzen 7.

In Fig. 4 ist der Verriegelungsbolzen 7 durch einen Hebel um einen bestimmten Winkel verschwenkt, so daß sich die Nockenscheibe 2 in einem ebenfalls bestimmten Winkelbereich unter dem Verriegelungsbolzen 7 hinwegdrehen kann.

Durch die Betätigung des Hebels wird der Verriegelungsbolzen 7 soweit ausgerückt, daß er sich bis zur zweiten Seitenfläche 24 bewegen kann und dann an diese anstößt (siehe Fig. 6).

Somit kann ein Benutzer durch Betätigung des Hebels zwischen der ersten Betriebstellung und der zweiten Betriebsstellung wählen; der Verriegelungsbolzen 7 kann in die erste Ausnehmung 3 (siehe Fig. 5) oder die zweite Ausnehmung 4 eingerastet werden (siehe Fig. 7).

Will der Benutzer die "easy entry" Position der Lehne und des Sitzes wählen, so betätigt er in der vorliegenden Ausführungsform den zweiten Bowdenzug, der an der zweiten Bowdenbefestigungsstelle 12 des zweiten Drehelements 10 angeordnet ist.

Durch die oben beschriebene Verschwenkung des zweiten Drehelements 10 wird der Verriegelungsbolzen 7 über die Kulissenmechanik des Verriegelungshebels 8 gegenüber der Nockenscheibe 2 radial so verschwenkt, das er gerade bis zur dritten Ausnehmung 5 gelangen kann. Die Seitenfläche 25 der dritten Ausnehmung 5 ragt wiederum radial etwas über den Rand hinaus, so daß dieser Vorsprung als Anschlag für den Verriegelungsbolzen 7 dient (siehe Fig. 8). In der Verrastung (siehe Fig. 9) ist der Verriegelungsbolzen 7 in die dritte Ausnehmung 5 eingerastet.

Der Ausnehmung 5 gegenüber liegt der Nocken 17 der Nockenscheibe 2, der wie oben beschrieben, die Gelenkhebelkette 31, 32, 33 betätigt, so daß in dieser Stellung der Nockenscheibe 2 der Sitz nach vorne schiebbar ist. Die Kombination von nach vorne geklappter Rückenlehne und nach vorne geschobenen Sitz ermöglicht einen leichteren Einstieg in das Fahrzeug (easy entry).

Durch die Betätigung des zweiten Drehelements 10 wird der Verriegelungsbolzen 7 über die Kulissenmechanik des Verriegelungshebels 8 gegenüber der Nockenscheibe radial noch weiter nach außen verschwenkt (Fig. 10), so daß er die Stufe der Seitenfläche 25 überwinden kann und bis zur vierten Ausnehmung 6 gelangen kann. In der Stellung läßt sich die Rückenlehne 1 in eine horizontale Lage bringen, so daß sie als Tisch verwendbar ist. In dieser Stellung ist der Verriegelungsbolzen 7 mit der vierten Ausnehmung 6 verrastbar (siehe Fig. 11).

Hier wurde eine Ausführungsform der erfindungsgemäßen Vorrichtung mit einer Nockenscheibe 2 mit vier Ausnehmungen 3, 4, 5, 6 (d.h. vier Betriebsstellungen) beschrieben.

Grundsätzlich können an der Nockenscheibe 2 auch mehr als vier Ausnehmungen angeordnet sein, um eine größere Vielzahl von Betriebsstellungen zu ermöglichen. So können z.B. auch zwei verschiedene "easy-entry" Stellungen definiert werden.
Auch kann das Rastmittel 2 anstelle von Ausnehmungen radial abstehende Zähne aufweisen, die eine Art Negativ-Bild der Nockenscheibe 2 mit Ausnehmungen wären.

Auch muß das Rastmittel nicht scheibenförmig ausgebildet sein. Alternativ könnte es auch zylindrisch sein, wobei die einzelnen Stufen der Verrastungen durch eine radiale, treppenartige Stufen ausgebildet sind, die in axialer Richtung mit einem Rastelement verrastbar sind.

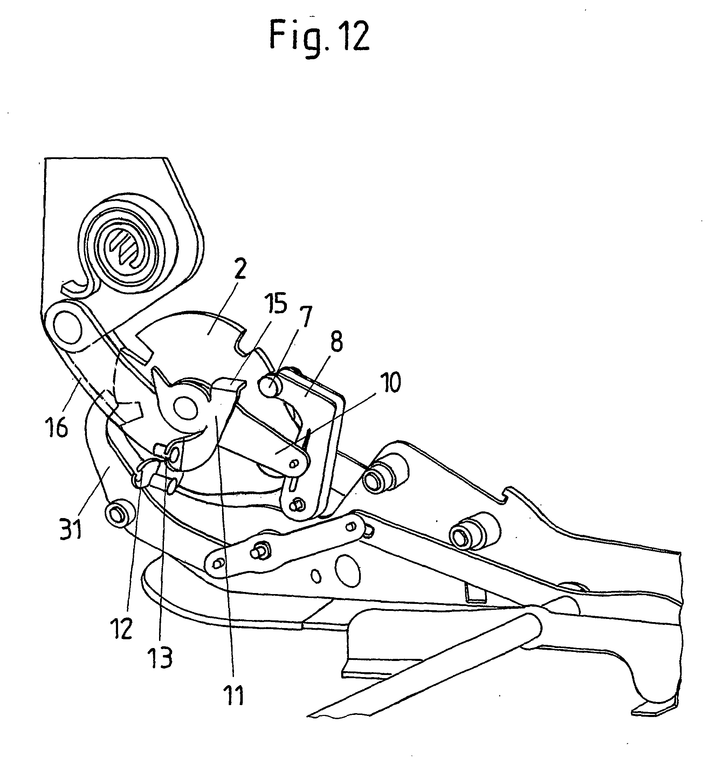

Die Fig. 12 bis 20 zeigen perspektivische Ansichten einer Ausführungsform der erfindungsgemäßen Vorrichtung. Dabei werden die gleichen Bauteil wie in dem Ausführungsbeispiel der Fig. 1 bis 11 verwendet, so daß auf die obige Beschreibung Bezug genommen werden kann. Die Entsprechungen der Betriebsstellungen, die in den Fig. 12 bis 20 dargestellt sind, ergeben sich aus der oben angegebenen Figurenverzeichnis.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Vorrichtung auch bei grundsätzlich anders gearteten Ausführungen Gebrauch machen.

## Patentansprüche

1. Vorrichtung zum Verstellen der Lehnenneigung einer Rückenlehne (1) eines Sitzes, insbesondere in einem Kraftfahrzeug, wobei die Rückenlehne (1) mit einem drehbaren Rastmittel (2) verbunden ist, das zur Einstellung der Lehnenneigung mit einem in seiner Lage verstellbaren Rastelement (7) in definierten Rastpositionen (3, 4, 5, 6) verrastbar ist,
**dadurch gekennzeichnet, daß**
das Rastelement (7) mindestens über zwei Betätigungsmechanismen (10, 11, 12, 13) in definierte räumliche Lagen bringbar ist, so daß es in einer Lage nur mit einer Teilmenge der möglichen Rastpositionen verrastbar ist und die Lage des Rastelements (7) über die mindestens zwei von einander unabhängig betätigbare Betätigungsmechanismen (10, 11, 12, 13) veränderbar ist.

2. Vorrichtung zum Verstellen der Lehnenneigung einer Rückenlehne (1) eines Sitzes, insbesondere in einem Kraftfahrzeug, wobei
die Rückenlehne (1) mit einem drehbaren Rastmittel (2) verbunden ist, das zur Einstellung der Lehnenneigung mit einem in seiner Lage verstellbaren Rastelement (7) in definierten Rastpositionen (3, 4, 5, 6) verrastbar ist,
wobei das Rastelement (7) über mindestens einen Betätigungsmechanismus (10, 11, 12, 13) in eine definierte räumliche Lage bringbar ist, so daß es in einer Lage nur mit einer Teilmenge der möglichen Rastpositionen verrastbar ist,
**dadurch gekennzeichnet, daß**
das Rastmittel (2) ein Auslösemittel, insbesondere einen Nocken (17) oder eine Bowdenzugverbindung aufweist, mit dem bei einer vorbestimmten Neigung der Rückenlehne (1) automatisch eine Arretierung der Horizontalverstellung des Sitzes gelöst und / oder verriegelt wird.

3. Vorrichtung nach Anspruch 1 oder 2, **dadurch gekennzeichnet, daß** das Rastmittel (2) so geformt ist, daß es mindestens einen Anschlag (24, 25) für das Rastelement (7) in einer bestimmten Lage aufweist
und das Rastelement (7) in dieser bestimmten Lage nur mit einer Teilmenge der Rastpositionen (3, 4, 5, 6) verrastbar ist.

4. Vorrichtung nach mindestens einem der vorhergehenden Ansprüche, **dadurch gekennzeichnet, daß** das Rastmittel (2) scheibenförmig ausgebildet ist, wobei das Rastelement (7) mit radial angeordneten Ausnehmungen (3, 4, 5, 6) verrastbar ist.

5. Vorrichtung nach Anspruch 4, **dadurch gekennzeichnet, daß** mindestens eine Seitenfläche (23, 24, 25, 26) der Ausnehmung (3, 4, 5, 6) radial länger ausgebildet ist, um einen Anschlag (24, 25) für das Rastelement (7) zu bilden.

6. Vorrichtung nach mindestens einem der vorhergehenden Ansprüche, **dadurch gekennzeichnet, daß** das Rastmittel (2) im wesentlichen als Zahnrad ausgebildet ist, wobei mindestens ein Zahn länger oder kürzer ist als die anderen Zähne.

7. Vorrichtung nach mindestens einem der vorhergehenden Ansprüche, **dadurch gekennzeichnet, daß** das Rastmittel (2) zylindrisch ausgebildet ist und eine konzentrisch umlaufende Struktur zur axialen Verrastung mit einem Rastelement (7) aufweist.

8. Vorrichtung nach mindestens einem der vorhergehenden Ansprüche, **dadurch gekennzeichnet, daß** das Rastelement (7) als Bolzen auf einem verschwenkbaren Verriegelungshebel (8) angeordnet ist.

9. Vorrichtung nach Anspruch 8, **dadurch gekennzeichnet, daß** die Lage des Rastelements (7) durch eine Verschwenkung des Verriegelungshebels (8) in einem bestimmten Winkelbereich veränderbar ist.

10. Vorrichtung nach Anspruch 8 oder 9, **dadurch gekennzeichnet, daß** der Verriegelungshebel (8) eine Kulissenführung (9) zur Verbindung mit mindestens einem Betätigungsmechanismus (10, 11, 12, 13) aufweist.

## Claims

1. Device for adjusting the backrest inclination of a backrest (1) of a seat, more particularly in a motor vehicle wherein the backrest (1) is connected to a rotatable detent locking means (2) which in order to adjust the backrest inclination can be locked in defined detent locking positions (3, 4, 5, 6) by a detent locking element (7) which can be adjusted in its position,
**characterised in that**
the detent locking element (7) can be brought at least through two operating mechanisms (10, 11, 12, 13) into defined spatial positions such that it in one position can only be locked in a partial number of the possible detent locking positions and the position of the detent locking element (7) can be changed through the at least two operating mechanisms (10, 11, 12, 13) which can be operated independently of each other.

2. Device for adjusting the backrest inclination of a backrest (1) of a seat, more particularly in a motor vehicle wherein
the backrest (1) is connected to a rotatable detent locking means (2) which in order to adjust the backrest inclination can be locked in defined detent locking positions (3, 4, 5, 6) by a detent locking element (7) which can be adjusted in its position, wherein
the detent locking element (7) can be brought at least through one operating mechanism (10, 11, 12, 13) into a defined spatial position such that it in one position can only be locked in a partial number of the possible detent locking positions,
**characterised in that**
the detent locking means (2) has release means, more particularly a cam (17) or a Bowden cable connection through which in the event of a predetermined inclination of the backrest (1) the locking of the horizontal adjustment of the seat is automatically released and/or locked.

3. Device according to claim 1 or 2 **characterised in that** the detent locking means (2) are shaped so that they have at least one stop (24, 25) for the detent locking element (7) in a certain position and the detent locking element (7) in this specific position can be locked only in a partial number of the detent positions (3, 4, 5, 6).

4. Device according to at least one of the preceding claims, **characterised in that** the detent locking means (2) are disc shaped whereby the detent locking element (7) can be locked in radially arranged recesses (3,4, 5, 6).

5. Device according to claim 4 **characterised in that** at least one side face (23, 24, 25, 26) of the recess (3, 4, 5, 6) is formed radially longer in order to form a stop (24, 25) for the detent locking element (7).

6. Device according to at least one of the preceding claims **characterised in that** the detent locking means (2) are formed substantially as a toothed wheel wherein at least one tooth is longer or shorter than the other teeth.

7. Device according to at least one of the preceding claims **characterised in that** the detent locking means (2) are formed cylindrical and have a concentric circumferential structure for axially engaging with a detent locking element (7).

8. Device according to at least one of the preceding claims **characterised in that** the detent locking element (7) is disposed as a bolt on a swivel-mounted locking lever (8).

9. Device according to claim 8 **characterised in that** the position of the detent locking element (7) can be changed by swivelling the locking lever (8) in a certain angular region.

10. Device according to claim 8 or 9 **characterised in that** the locking lever (8) has a slide guide (9) for connecting with at least one operating mechanism (10, 11, 12, 13).

## Revendications

1. Dispositif pour le réglage de l'inclinaison du dossier (1) d'un siège, en particulier dans un véhicule automobile, dans lequel le dossier (1) est raccordé à un moyen d'encliquetage (2) pouvant être mis en rotation, qui, pour le réglage de l'inclinaison du siège, peut être verrouillé avec un élément d'encliquetage (7) réglable dans des positions d'encliquetage définies (3, 4, 5, 6),
**caractérisé en ce que**
l'élément d'encliquetage (7) peut être amené au moins par l'intermédiaire de deux mécanismes d'actionnement (10, 11, 12, 13) dans des positions spatiales définies, de sorte qu'il est en mesure de n'être bloqué que dans une partie des positions d'encliquetage possibles et la position de l'élément d'encliquetage (7) peut être modifiée par l'intermédiaire d'au moins deux de l'un ou l'autre des mécanismes d'actionnement pouvant être actionnés indépendamment (10, 11, 12, 13).

2. Dispositif pour le réglage de l'inclinaison d'un dossier (1) d'un siège, en particulier dans un véhicule automobile,
dans lequel le dossier (1) est raccordé à un élément d'encliquetage (2) pouvant être mis en rotation, qui, pour le réglage de l'inclinaison du dossier, est raccordé avec un élément d'encliquetage réglable dans sa position (7) dans des positions d'encliquetage définies (3, 4, 5, 6),
dans lequel l'élément d'encliquetage (7) peut être amené par au moins un mécanisme d'actionnement (10, 11, 12, 13) dans une position spatiale définie, de sorte qu'il ne peut être encliqueté que dans une partie des positions d'encliquetage possibles,
**caractérisé en ce que**
le moyen d'encliquetage (2) présente un moyen de déclenchement, en particulier une came (12) ou une liaison à câble Bowden, avec lequel, pour une inclinaison prédéterminée du dossier (1), un encliquetage est verrouillé ou libéré automatiquement pour une position horizontale du siège.

3. Dispositif selon la revendication 1 ou 2, **caractérisé en ce que** le moyen d'encliquetage 2 est formé de telle sorte qu'il présente au moins une butée (24, 25) pour l'élément d'encliquetage (7) dans une position déterminée et l'élément d'encliquetage (7) peut être encliqueté dans cette position déterminée uniquement dans une partie des positions d'encliquetage (3, 4, 5, 6).

4. Dispositif selon au moins l'une des revendications précédentes, **caractérisé en ce que** le moyen d'encliquetage (2) est conçu sous forme de disque, dans lequel l'élément d'encliquetage (7) peut être encliquetés par des évidements disposés radialement (3, 4, 5, 6).

5. Dispositif selon la revendication 4, **caractérisé en ce qu'**au moins une face latérale (23, 24, 25, 26) de l'évidement (3, 4, 5, 6) est formée radialement sur une plus grande longueur pour configurer une butée (24, 25) pour l'élément d'encliquetage.

6. Dispositif selon au moins l'une des revendications précédentes, **caractérisé en ce que** le moyen d'encliquetage (2) est formé sensiblement en tant que roue dentée, dans lequel au moins une dent est plus longue ou plus courte que les autres dents.

7. Dispositif selon au moins l'une des revendications précédentes, **caractérisé en ce que** le moyen d'encliquetage (2) est configuré de façon cylindrique et présente une structure en rotation concentrique par rapport à l'encliquetage axial avec un élément d'encliquetage (7).

8. Dispositif selon au moins l'une des revendications précédentes, **caractérisé en ce que** l'élément d'encliquetage (7) est disposé en tant que boulon sur un levier de verrouillage (8) pouvant basculer.

9. Dispositif selon la revendication 8, **caractérisé en ce que** la position de l'élément d'encliquetage (7) peut être modifiée par un basculement du levier de verrouillage (8) dans une zone angulaire déterminée.

10. Dispositif selon la revendication 8 ou 9, **caractérisé en ce que** le levier de verrouillage (8) présente un guidage à coulisse (9) pour la liaison avec au moins un mécanisme d'actionnement (10, 11, 12, 13).
